# EUROPEAN PATENT APPLICATION

(11) **EP 3 267 539 A1**
(43) Date of publication of application: **10.01.2018**
(21) Application number: 16177725.5
(22) Date of filing: 04.07.2016
(51) Int. Cl.: H02B 1/30, H02B 1/32, H05K 5/02, H02B 1/20, H02B 13/035

(54) **METHOD OF INSTALLING ELECTRICAL DEVICE ASSEMBLY, AND ELECTRICAL DEVICE ASSEMBLY**

(71) Applicant: ABB Technology Oy, 00380 Helsinki (FI)
(72) Inventor: Seväkivi, Pertti, 00380 Helsinki (FI); Sääskilahti, Veli, 00380 Helsinki (FI); Mertkoski, Jarmo, 00380 Helsinki (FI)
(74) Representative: Kolster Oy Ab

(57) **Abstract**

A method of installing an electrical device assembly, the method comprising steps of providing a cabling enclosure (2) comprising a cabling enclosure frame (21) and a plurality of cable connectors (24); providing a device enclosure (4); mounting an electrical device (6) into the device enclosure (4), the electrical device (6) comprising a plurality of terminals each of which is adapted to be electrically conductively connected to a corresponding cable connector (24); connecting a plurality of cables (5) to the plurality of cable connectors (24); and connecting the plurality of terminals of the electrical device (6) to the plurality of cable connectors (24). The method comprises an enclosure connection step in which the device enclosure (4) is mechanically connected to the cabling enclosure (2), the enclosure connection step being carried out after the step of connecting the plurality of cables (5) to the plurality of cable connectors (24).

## Description

### FIELD OF THE INVENTION

The present invention relates to an electrical device assembly comprising a device enclosure adapted to accommodate an electrical device, and a cabling enclosure adapted to receive cables for supplying electricity to an electrical device accommodated in the device enclosure.

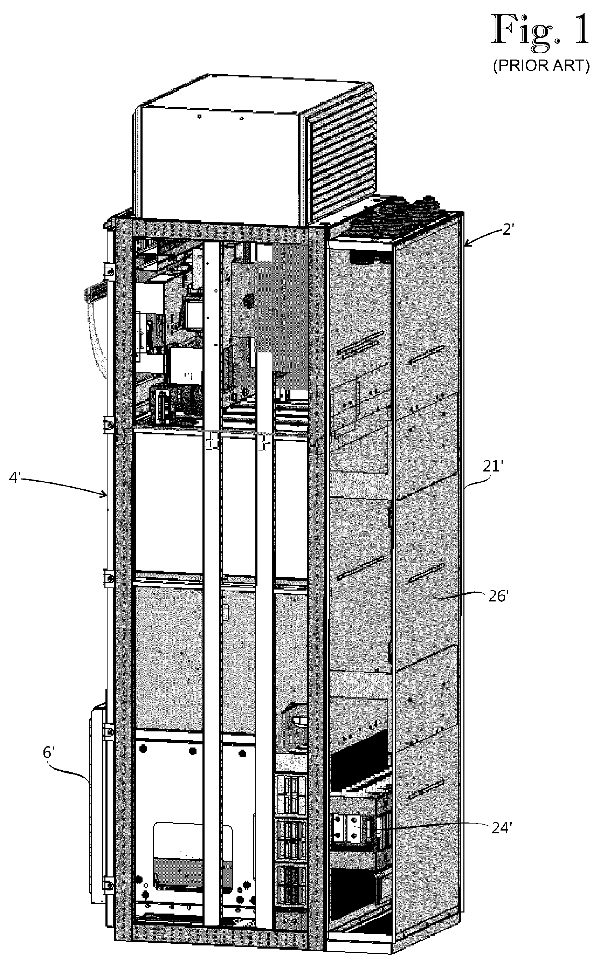

Figure 1 shows a known electrical device assembly comprising a cabling enclosure 2' and a device enclosure 4'. The cabling enclosure 2' is adapted to receive a plurality of cables, and comprises a cabling enclosure frame 21' and a plurality of cable connectors 24' mechanically connected to the cabling enclosure frame 21'. Each of the cable connectors 24' is adapted to be electrically conductively connected to a corresponding cable. The device enclosure 4' accommodates an electrical device 6'. The cabling enclosure 2' is fixedly connected to the device enclosure 4'.

One of the problems associated with the electrical device assembly shown in Figure 1 is that it is difficult to connect cables to the plurality of cable connectors 24', especially in situations where the cabling enclosure 2' cannot be accessed from behind. Figure 1 shows that a back wall 26' of the cabling enclosure 2' also forms a back wall of the entire electrical device assembly. In some cases the electrical device 6', or at least a part thereof, must be removed from the device enclosure 4' before it is possible to connect cables to the plurality of cable connectors 24'.

### BRIEF DESCRIPTION OF THE INVENTION

An object of the present invention is to provide an installation method and an electrical device assembly for implementing the method so as to solve the above problems. The objects of the invention are achieved by an installation method and an electrical device assembly which are characterized by what is stated in the independent claims. Preferred embodiments of the invention are disclosed in the dependent claims.

The invention is based on the idea of providing a cabling enclosure as a separate component from a device enclosure such that the cabling enclosure is adapted to be mechanically connected to the device enclosure after cables have been connected to cable connectors of the cabling enclosure.

An advantage of the installation method and electrical device assembly of the invention is that connecting cables to cable connectors of a cabling enclosure is easy because a device enclosure is not restricting access to the cabling enclosure. Further, if connecting cables to cable connectors of a cabling enclosure spreads dust into air, a device enclosure and an electrical device mounted inside the device enclosure are not exposed to the dust because they are separated from the cabling enclosure during connection of the cables.

### BRIEF DESCRIPTION OF THE DRAWINGS

In the following the invention will be described in greater detail by means of preferred embodiments with reference to the attached drawings, in which
Figure 1 shows a known electrical device assembly;
Figure 2 shows an electrical device assembly according to an embodiment of the invention in a disassembled state; and
Figure 3 shows the electrical device assembly of Figure 2 in an assembled state.

### DETAILED DESCRIPTION OF THE INVENTION

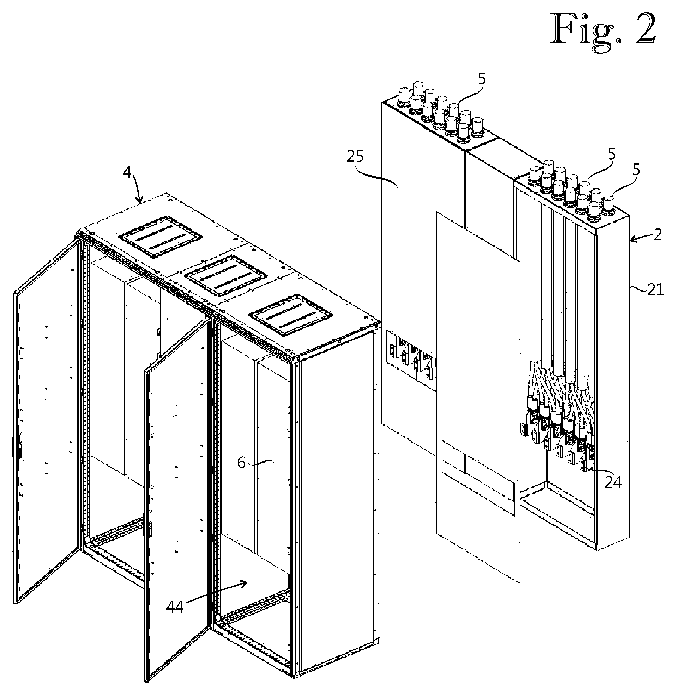

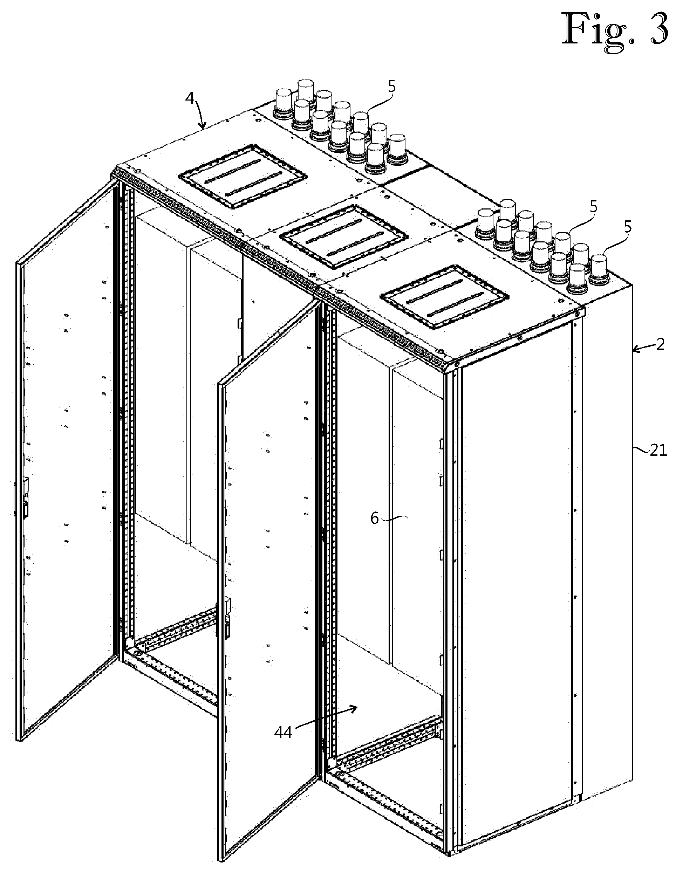

Figure 2 shows an electrical device assembly in a disassembled state, and Figure 3 shows the electrical device assembly in an assembled state. The electrical device assembly comprises a cabling enclosure 2 adapted to receive a plurality of cables, and a device enclosure 4 adapted to accommodate an electrical device. In Figure 2, the electrical device assembly includes an electrical device 6 mounted to the device enclosure 4, and a plurality of cables 5 connected to the cabling enclosure 2. The cables 5 extend substantially in a vertical direction.

The cabling enclosure 2 comprises a cabling enclosure frame 21 and a plurality of cable connectors 24 mechanically connected to the cabling enclosure frame 21. Each of the cable connectors 24 is adapted to be electrically conductively connected to a cable 5. Herein, connecting a cable connector electrically conductively to a cable means connecting the cable connector electrically conductively to an electrical conductor of the cable.

The cabling enclosure 2 is a separate component from the device enclosure 4. The cabling enclosure 2 is adapted to be mechanically connected to the device enclosure 4 after a plurality of cables have been electrically conductively connected to the plurality of cable connectors 24. The device enclosure 4 is adapted to be mechanically connected to the cabling enclosure 2 by means of screws or bolt-nut connections. In an alternative embodiment a device enclosure is adapted to be mechanically connected to a cabling enclosure by means of welding or riveting.

The electrical device 6 is a frequency converter comprising a plurality of controllable semiconductor switches for the purpose of converting input frequency electricity into output frequency electricity. In an alternative embodiment an electrical device is another type of power converter adapted to convert electric energy from one form to another. The power converter may be an inverter, a rectifier, or a DC-to-DC converter, for example.

The electrical device 6 comprises a plurality of terminals each of which is adapted to be electrically conductively connected to a corresponding cable connector 24 of the cabling enclosure 2. The plurality of terminals comprises input terminals for supplying input frequency electricity into the electrical device 6, and output terminals for supplying output frequency electricity out of the electrical device 6. The plurality of terminals of the electrical device 6 is adapted to be electrically conductively connected to the plurality of cable connectors 24 by means of bolt-nut connections. The terminals of the electrical device 6 are not shown in Figures 2 and 3.

In an alternative embodiment a device enclosure comprises a busbar system through which an electrical device is adapted to be electrically conductively connected to a plurality of cable connectors in a cabling enclosure. The busbar system is mechanically connected to the device enclosure.

A height of the cabling enclosure 2 is the greatest dimension thereof, and a depth is the smallest dimension of the cabling enclosure 2. Herein, a depth dimension is perpendicular to a front surface 25 of the cabling enclosure 2 which is facing a back surface of the device enclosure 4 in the assembled state of the electrical device assembly. The plurality of cable connectors 24 is located in a lower section of the cabling enclosure 2.

A height of the device enclosure 4 is the greatest dimension thereof. The plurality of terminals of the electrical device 6 is located in a lower section of the device enclosure 4. The height of the device enclosure 4 is the same as the height of the cabling enclosure 2. In an alternative embodiment a height of a device enclosure is different than a height of a cabling enclosure.

The device enclosure 4 is mechanically connected to the cabling enclosure 2 in an enclosure connection step which comprises pushing the device enclosure 4 adjacent to the cabling enclosure 2 such that a back wall of the device enclosure 4 abuts the front surface 25 of the cabling enclosure 2. Said pushing can be performed in a direction parallel to the depth dimension of the device enclosure 4, for example. The enclosure connection step further comprises mechanically connecting the device enclosure 4 to the cabling enclosure 2 by means of screws or bolt-nut connections. The enclosure connection step is carried out after a step of connecting the plurality of cables 5 electrically conductively to the plurality of cable connectors 24.

The electrical device assembly is adapted such that it is possible to electrically conductively connect the plurality of terminals of the electrical device 6 to the plurality of cable connectors 24 while the plurality of cable connectors 24 are in electrically conductive connection to respective cables 5. For this purpose the device enclosure 4 comprises an assembly space 44 below the electrical device 6. The assembly space 44 provides an access to the terminals of the electrical device 6 in a situation where the back wall of the device enclosure 4 abuts the front surface 25 of the cabling enclosure 2 as shown in Figure 3.

When the back wall of the device enclosure 4 abuts the front surface 25 of the cabling enclosure 2, the plurality of terminals of the electrical device 6 abuts the plurality of cable connectors 24. In an embodiment each of cable connectors comprises a bolt integrated into the cable connector, and each of terminals of an electrical device comprises an aperture adapted to receive a threaded part of a corresponding integrated bolt. Consequently an assembler can finish an electrically conductive connection between the terminals of the electrical device and the cable connectors by tightening corresponding nuts through the assembly space, each of the nuts co-operating with a threaded part of a corresponding integrated bolt.

In an alternative embodiment each of cable connectors comprises a nut integrated into the cable connector, and each of terminals of an electrical device comprises an aperture adapted to receive a threaded part of a corresponding bolt. The threaded part of the bolt co-operates with the integrated nut thereby pressing the terminal of the electrical device against the cable connector.

In an embodiment a plurality of terminals of an electrical device are electrically conductively connected to a plurality of cable connectors after a cabling enclosure is mechanically connected to a device enclosure. In another embodiment a plurality of terminals of an electrical device are electrically conductively connected to a plurality of cable connectors before a cabling enclosure is mechanically connected to a device enclosure, that is before screw connections or bolt-nut connections are formed between the device enclosure and the cabling enclosure, for example.

The cabling enclosure 2 is adapted to receive a plurality of cables 5 through an upper surface of the cabling enclosure 2. The upper surface of the cabling enclosure 2 is not a solid wall but rather a surface defined by a framework. Herein, receiving a plurality of cables 5 means that the cabling enclosure 2 receives an end of each of the cables 5. In other words the cabling enclosure 2 is adapted to accommodate an end of each of the cables 5. The other ends of the cables, which in a use situation extend outside the cabling enclosure 2, are depicted in Figures 2 and 3 as short sections of cables protruding from the upper surface of the cabling enclosure 2.

In an alternative embodiment a cabling enclosure is adapted to receive a plurality of cables through a lower surface of the cabling enclosure. In a further alternative embodiment a cabling enclosure is adapted to receive a plurality of cables through a side surface of the cabling enclosure.

It will be obvious to a person skilled in the art that the inventive concept can be implemented in various ways. The invention and its embodiments are not limited to the examples described above but may vary within the scope of the claims.

## Claims

1. A method of installing an electrical device assembly, the method comprising steps of:
providing a cabling enclosure (2) adapted to receive a plurality of cables (5), the cabling enclosure (2) comprising a cabling enclosure frame (21) and a plurality of cable connectors (24) mechanically connected to the cabling enclosure frame (21), each of the cable connectors (24) is adapted to be electrically conductively connected to a corresponding cable (5);
providing a device enclosure (4) adapted to accommodate an electrical device (6);
mounting an electrical device (6) into the device enclosure (4), the electrical device (6) comprising a plurality of terminals each of which is adapted to be electrically conductively connected to a corresponding cable connector (24);
connecting a plurality of cables (5) electrically conductively to the plurality of cable connectors (24);
connecting the plurality of terminals of the electrical device (6) electrically conductively to the plurality of cable connectors (24),
**characterized in that** the method comprises an enclosure connection step in which the device enclosure (4) is mechanically connected to the cabling enclosure (2), the enclosure connection step being carried out after the step of connecting the plurality of cables (5) electrically conductively to the plurality of cable connectors (24).

2. A method according to claim 1, **characterized in that** the enclosure connection step comprises mechanically connecting the device enclosure (4) to the cabling enclosure (2) by means of screws or bolt-nut connections.

3. A method according to claim 1 or 2, **characterized in that** the step of connecting the plurality of terminals of the electrical device (6) electrically conductively to the plurality of cable connectors (24) comprises use of bolt-nut connections.

4. A method according to any one of claims 1 to 3, **characterized in that** the step of connecting the plurality of terminals of the electrical device (6) electrically conductively to the plurality of cable connectors (24) is carried out after the step of connecting the plurality of cables (5) electrically conductively to the plurality of cable connectors (24).

5. An electrical device assembly comprising:
a cabling enclosure (2) adapted to receive a plurality of cables (5), the cabling enclosure (2) comprising a cabling enclosure frame (21) and a plurality of cable connectors (24) mechanically connected to the cabling enclosure frame (21), each of the cable connectors (24) is adapted to be electrically conductively connected to a corresponding cable (5);
a device enclosure (4) adapted to accommodate an electrical device (6);
**characterized in that** the cabling enclosure (2) is a separate component adapted to be mechanically connected to the device enclosure (4) after a plurality of cables (5) have been electrically conductively connected to the plurality of cable connectors (24).

6. An electrical device assembly according to claim 5, **characterized in that** the device enclosure (4) is adapted to be mechanically connected to the cabling enclosure (2) by means of screws or bolt-nut connections.

7. An electrical device assembly according to claim 5 or 6, **characterized in that** the electrical device assembly comprises an electrical device (6) mounted to the device enclosure (4), the electrical device (6) comprising a plurality of terminals each of which is adapted to be electrically conductively connected to a corresponding cable connector (24) of the cabling enclosure (2).

8. An electrical device assembly according to claim 7, **characterized in that** the plurality of terminals of the electrical device (6) is located in a lower section of the device enclosure (4).

9. An electrical device assembly according to claim 7, **characterized in that** the plurality of terminals of the electrical device (6) are adapted to be electrically conductively connected to the plurality of cable connectors (24) by means of bolt-nut connections.

10. An electrical device assembly according to any one of claims 7 to 9, **characterized in that** the electrical device assembly is adapted such that it is possible to electrically conductively connect the plurality of terminals of the electrical device (6) to the plurality of cable connectors (24) while the plurality of cable connectors (24) are in electrically conductive connection to respective cables (5).

11. An electrical device assembly according to any one of claims 7 to 10, **characterized in that** the electrical device (6) is a power converter adapted to convert electric energy from one form to another.

12. An electrical device assembly according to claim 11, **characterized in that** the power converter comprises a plurality of controllable semiconductor switches for the purpose of converting electric energy from one form to another.

13. An electrical device assembly according to any one of claims 5 to 12, **characterized in that** the cabling enclosure (2) is adapted to receive the plurality of cables (5) through an upper surface of the cabling enclosure (2).

14. An electrical device assembly according to any one of claims 5 to 13, **characterized in that** a height of the device enclosure (4) is the greatest dimension thereof.

15. An electrical device assembly according to any one of claims 5 to 14, **characterized in that** the electrical device assembly comprises a plurality of cables (5) electrically conductively connected to the plurality of cable connectors (24).
